# EUROPÄISCHE PATENTANMELDUNG

(11) **EP 2 960 103 A1**
(43) Veröffentlichungstag der Anmeldung: **30.12.2015**
(21) Anmeldenummer: 15450023.5
(22) Anmeldetag: 18.06.2015
(51) Int. Cl.: B60M 1/20

(54) **FAHRLEITUNGSMAST FÜR OBERLEITUNGSANLAGEN ELEKTRISCHER SCHIENENFAHRZEUGE**

(30) Priorität: 24.06.2014 AT 4952014; 05.03.2015 AT 1172015
(71) Anmelder: Ing. Karl u. Albert Kruch GmbH & Co. KG, 1230 Wien (AT)
(72) Erfinder: Röhl, Jan, 2500 Siegenfeld (AT)
(74) Vertreter: Rippel, Andreas

(57) **Zusammenfassung**

Bei einem Fahrleitungsmast für Oberleitungsanlagen elektrischer Schienenfahrzeuge sind am Mast (1, 1', 1", 31, 32) Führungen (6, 36) für einen den Mast (1, 1', 1", 31, 32) nach oben verlängernden Träger (7, 37) angeordnet, der einen die Oberleitung (14) haltenden Ausleger (13, 40) trägt, wobei der Träger (7, 37) in den Führungen (6, 36) verschiebbar ist.

Dadurch wird eine Regulierung der Höhe der Oberleitung vereinfacht.

## Beschreibung

Die Erfindung bezieht sich auf einen Fahrleitungsmast für Oberleitungsanlagen elektrischer Schienenfahrzeuge.

Bei bekannten Masten erfolgt die Anbringung der Ausleger für die Halterung der Oberleitung meist mittels den mastumgreifenden Schellen, die durch Schrauben verspannt werden. Bei einer notwendigen Veränderung der Höhe des Fahrdrahtes, einer Fahrdrahtlagenregulierung, muss eine Vielzahl von Schrauben gelöst, die Ausleger verschoben und die Schrauben wieder angezogen werden. Ein solches Verfahren ist umständlich und teuer.

Die Erfindung hat eine Anordnung geschaffen, mit der eine Fahrdrahtlagenregulierung auf weitaus einfachere Art erreichbar ist als es bisher möglich war.

Diese erfindungsgemäße Anordnung zeichnet sich dadurch aus, dass am Mast Führungen für einen den Mast nach oben verlängernden Träger angeordnet sind, der einen die Oberleitung haltenden Ausleger trägt, wobei der Träger in den Führungen verschiebbar ist.

Wenn bei einer mit einem erfindungsgemäßen Fahrleitungsmast ausgestatteten Oberleitungsanlage die Höhenlage des Fahrdrahtes verändert werden muss, wird der Träger einfach in die gewünschte Höhe verschoben.

Bei einem Ausführungsbeispiel der Erfindung ist eine auf den Träger wirkende Stellschraube und an einer Führung eine Fixierschraube angeordnet. Es muss dann bloß die Fixierschraube gelöst und durch Betätigung der Stellschraube der Träger auf die gewünschte Höhe verstellt werden, worauf die Fixierschraube wieder angezogen wird.

Bei einer besonders montagefreundlichen Ausführungsform der Erfindung ist der Träger als T-Stahlträger oder Doppel T-Stahlträger, vorzugsweise Breitflanschträger ausgebildet, der eine Ausklinkung aufweist, mittels der er in eine Führung einsetzbar ist. Dadurch ist es möglich, am Träger vor dessen Anbringung am Mast den Ausleger zu montieren und dann den komplett vormontierten Träger im Bereich der Ausklinkung in die Führung einzusetzen, zu verschieben und festzustellen.

Im Rahmen der Erfindung kann der Mast als Federpaar mit zwei im Bereich ihrer Enden miteinander verbundenen Formrohren ausgebildet sein.

Federpaare sind in der Technik insbesondere als Rechteckfederpaare bekannt, wobei der Momentenverlauf dieser Biegefedern bei Biegung äußerst günstig ist.

Bei einem weiteren Ausführungsbeispiel der Erfindung ist am Mast die Rolle eines Radspannwerkes befestigt. Durch die Anordnung der beiden Formrohre ist es möglich, dass das Gewicht des Radspannwerkes zwischen den beiden Formrohren geführt ist.

Bei einer besonders zweckmäßigen Ausführungsform der Erfindung ist eine Gewindespindel in eine im oberen Bereich des Mastes angeordnete Mutter einschraubbar und in einem den Träger in einer Führung haltenden unteren Führungsteil drehbar gelagert.

Wenn bei einer mit einem solchen erfindungsgemäßen Fahrleitungsmast ausgestatteten Oberleitungsanlage die Höhenlage des Fahrdrahtes verändert werden muss, kann dies auf einfache Art durch Verdrehen der Gewindespindel vom Boden aus erfolgen.

Um die Montage des Trägers am Mast zu erleichtern ist erfindungsgemäß vorgesehen, dass eine obere Führung zwei sich maulförmig nach außen öffnende Führungsteile aufweist, die mit beim Einschieben des Mastes federnd zurückweichenden Sperrfedern versehen sind, wobei zwischen den Führungsteilen die Mutter für die Gewindespindel angeordnet ist.

Bei einer solchen Ausführungsform kann der Träger von außen zwischen die beiden Führungsteile eingeschoben werden, wobei die Sperrfedern das Einschieben zwar zulassen, eine Rückbewegung jedoch verhindern.

Zweckmäßig sind die beiden Formrohre als Führung für den unteren Führungsteil ausgebildet.

Nachstehend ist die Erfindung anhand von in den Zeichnungen dargestellten Ausführungsbeispielen näher beschrieben, ohne auf diese Beispiele beschränkt zu sein. Dabei zeigen:
Fig. 1 eine Seitenansicht eines erfindungsgemäßen Fahrleitungsmastes für Oberleitungsanlagen elektrischer Schienenfahrzeuge;
Fig. 2 eine Ansicht des Fahrleitungsmastes nach der Erfindung quer zur Ansicht nach Fig. 1;
Fig. 3 eine schaubildliche Ansicht des Fahrleitungsmastes nach den Fig. 1 und 2;
Fig. 4 in vergrößertem Maßstab ein Detail;
Fig. 5 eine schaubildliche Ansicht eines Fahrleitungsmastes einer weiteren Ausführungsform der Erfindung;
Fig. 6 eine schaubildliche Ansicht eines Fahrleitungsmastes mit in der Mitte geführten Gewichten;
Fig. 7 in vergrößertem Maßstab ein Detail.
Fig. 8 eine schaubildliche Ansicht eines erfindungsgemäßen Fahrleitungsmastes;
Fig. 9 eine schaubildliche Ansicht der oberen Führung;
Fig. 10 eine Ansicht auf die obere Führung mit einem teilweise eingefügten Schnitt;
Fig. 11 eine schaubildliche Ansicht des unteren Führungsteils;
Fig. 12 eine Draufsicht auf den unteren Führungsteil;
Fig. 13 eine Ansicht der Gewindespindel;
Fig. 14 eine schaubildliche Ansicht eines mit einem Radspannwerk versehenen Fahrleitungsmastes.

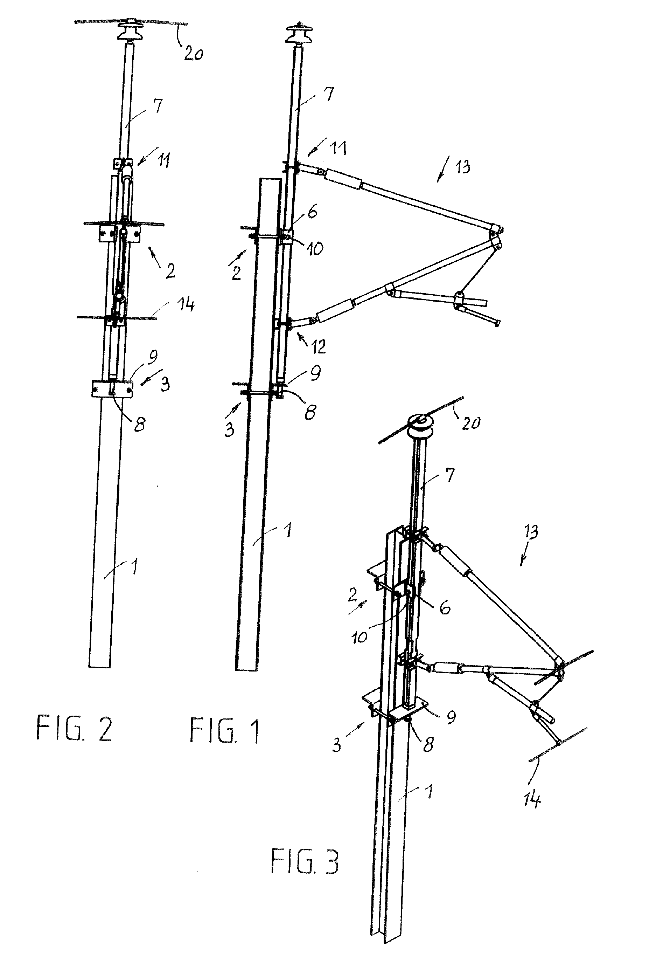

Gemäß den Fig. 1 bis 4 ist an einem Fahrleitungsmast 1 mittels einer oberen Befestigung 2 und einer unteren Befestigung 3 ein Träger 7 befestigt. Die Befestigungen 2 und 3 bestehen aus Winkeln, die durch Schrauben am Mast 1 verspannt werden.

An der oberen Befestigung 2 ist eine Führung 6 für den Träger 7 befestigt, der in der Führung 6 lotrecht verschiebbar ist. Am unteren Ende des Trägers 7 greift eine Stellschraube 8 an, die in einem Winkel 9 der unteren Befestigung 3 verschraubbar ist.

In die Führung 6 ist eine Fixierschraube 10 einschraubbar, die auf den Träger 7 wirkt um ihn festzustellen.

Am Träger 7 ist bei 11 und 12 ein bekannter Z-Ausleger 13 befestigt. Dieser hält das Tragseil und den Fahrdraht 14 in der gewünschten Höhenlage über dem Gleis (nicht dargestellt).

Sollte die Höhenlage des Fahrdrahtes über dem Gleis verändert werden, braucht nur die Fixierschraube 10 gelöst und durch entsprechendes Verschrauben der Stellschraube 8 der Träger 7 vertikal verstellt werden. Bei Erreichen der gewünschten Höhenlage wird die Fixierschraube 10 wieder angezogen.

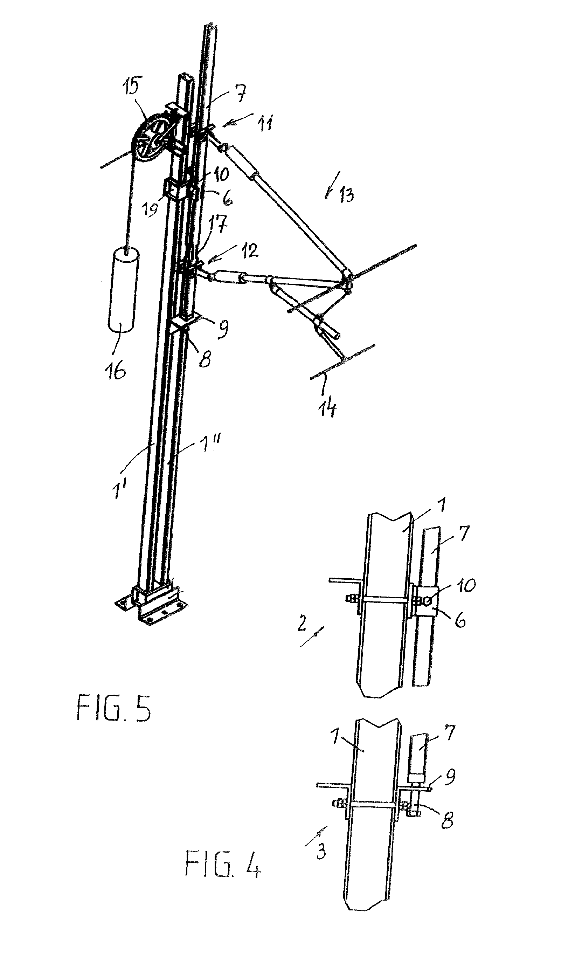

In Fig. 5 sind für gleiche Teile die gleichen Bezugszeichen verwendet wie in den Fig. 1 bis 4.

Ein Unterschied gegenüber dem Ausführungsbeispiel nach den Fig. 1 bis 4 ist, dass der Mast aus zwei Formrohren 1' und 1 " besteht, wobei das eine Formrohr 1' des Mastes länger ist. An dieser Verlängerung ist die Rolle 15 eines Radspannwerkes befestigt, dessen Gewicht 16 die Oberleitung spannt.

Die Montage wird wesentlich erleichtert, wenn der Träger 7 vorzugsweise als Breitflanschträger ausgebildet ist und eine Ausklinkung 17 aufweist. Die Führung 6 besteht aus zwei Teilen, wobei zwischen den beiden Teilen ein so großer Abstand ist, dass der Träger 7 im Bereich der Ausklinkung 17 in die Führung 6 eingesetzt werden kann, worauf er vertikal verschoben und mit der Fixierschraube 10 festgestellt wird.

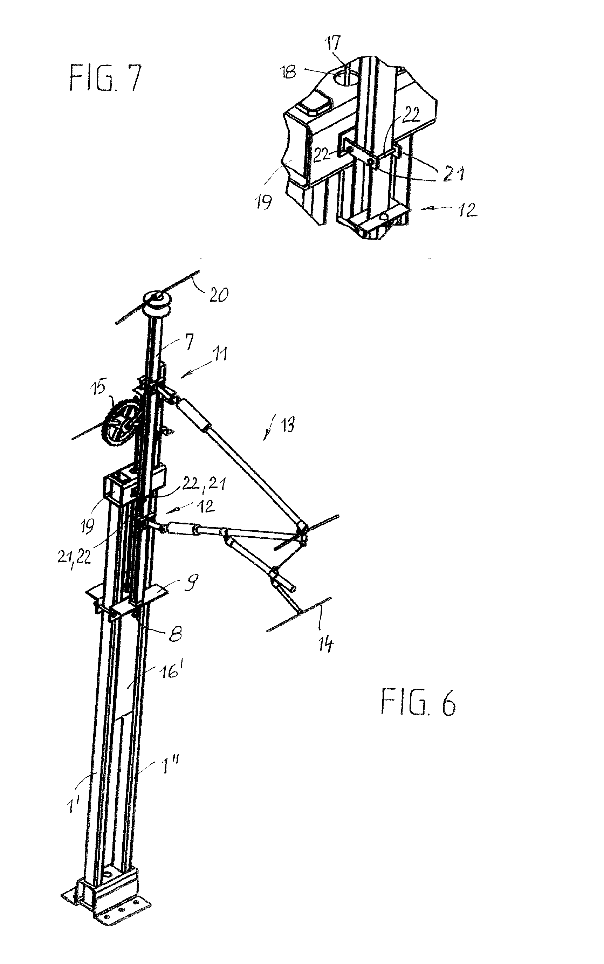

Bei der Ausführungsform nach den Fig. 6 und 7 ist das Gewicht 16', welches die Oberleitung spannt, zwischen den Formrohren 1', 1" geführt. Das von der Rolle 15' des Radspannwerkes kommende, das Gewicht 16' tragende Seil 17 ist durch Bohrungen 18 des die beiden Formrohre 1', 1" verbindenden Verbindungsstückes 19 geführt. An der Spitze des Trägers 7 ist, so wie beim Ausführungsbeispiel nach den Fig. 1 bis 3, eine Leitung 20 geführt.

Die obere Befestigung des Trägers 7 erfolgt bei diesem Ausführungsbeispiel durch zwei Flacheisen 21 mit zwei Schrauben 22 als Quersicherung. Die beiden Flacheisen 21 werden an das Verbindungsstück 19 angeschweißt.

Die Feststellung des Trägers 7 erfolgt durch Anziehen der vorderen Schraube 22. Auch bei dieser Ausführungsform kann am Träger vor dessen Anbringung am Mast der Ausleger 13 montiert werden, worauf dann der komplett vormontierte Träger zwischen die Flacheisen 21 eingesetzt wird.

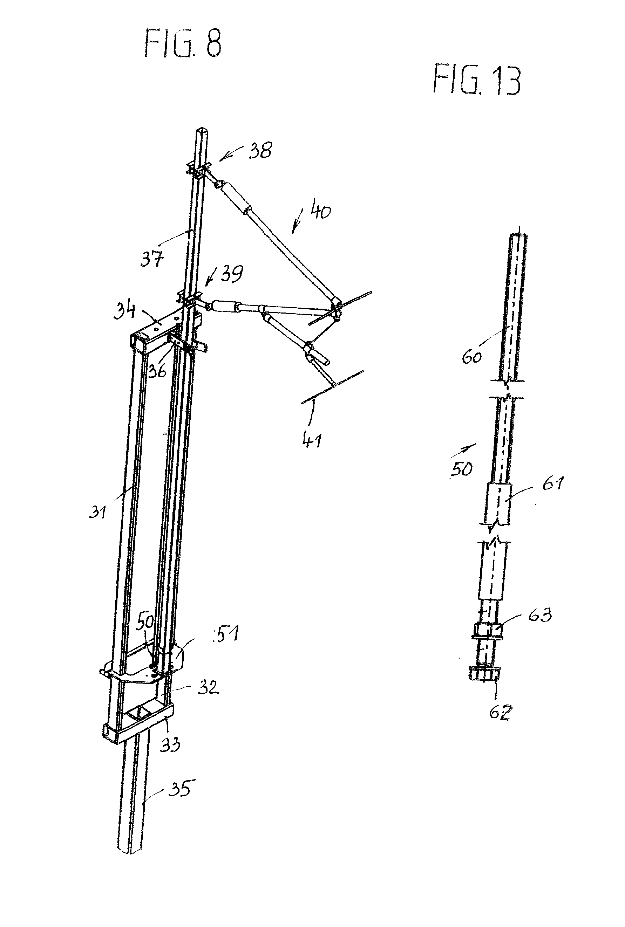

Gemäß Fig. 8 weist ein erfindungsgemäßer Fahrleitungsmast zwei Formrohre 31 und 32 auf, die unten durch ein Verbindungsstück 33 und oben durch ein Verbindungsstück 34 miteinander verbunden sind. Am Verbindungsstück 33 ist ein Rohr 35 befestigt, das der Verankerung des Fahrmastes im Boden dient.

Am oberen Führungsstück 34 ist eine Führung 36 für einen Träger 37 befestigt, der in der Führung 36 lotrecht verschiebbar ist.

Am Träger 37 ist bei 38 und 39 ein bekannter Z-Ausleger 40 befestigt. Dieser hält den Fahrdraht 41 in der gewünschten Höhenlage über dem Gleis (nicht dargestellt).

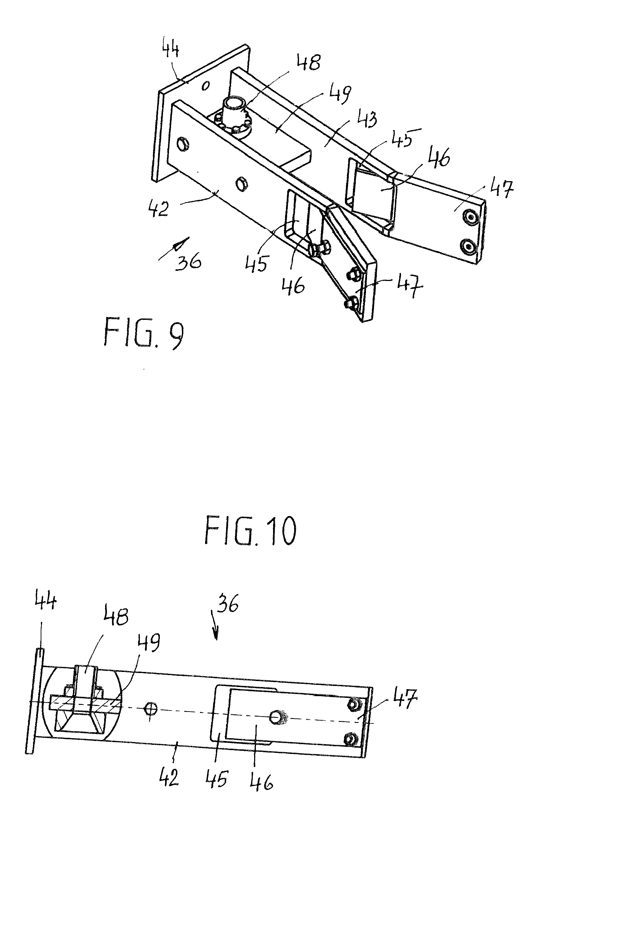

Die in den Fig. 9 und 10 gegenüber Fig. 8 vergrößert dargestellte Führung 36 weist zwei Führungsteile 42 und 43 auf, die sich maulförmig nach außen öffnen. Mittels einer Befestigungsplatte 44 ist die Führung 36 am oberen Verbindungsstück 34 befestigt. In Öffnungen 45 ragen Sperrfedern 46, die um ihre äußeren Enden 47, an denen sie an den maulförmigen Enden der Führungsteile 42 und 43 befestigt sind, schwenkbar sind.

Beim Einschieben des Trägers 37 zwischen die Führungsteile 42 und 43 bewegen sich daher die Sperrfedern 46 nach außen um nach Beendigung des Einschiebens wieder nach innen zu federn und so eine Rückbewegung des Trägers 37 verhindern.

Zwischen den beiden Führungsteilen 42 und 43 ist eine Mutter 48 auf einer Platte 49 befestigt. In die Mutter 48 ist eine parallel zum Träger 37 verlaufende Gewindespindel 50 einschraubbar, welche in einem unteren Führungsteil 51 drehbar gelagert ist. Der Führungsteil 51 ist in den als Führungen ausgebildeten Holmen 31 und 32 verschiebbar geführt.

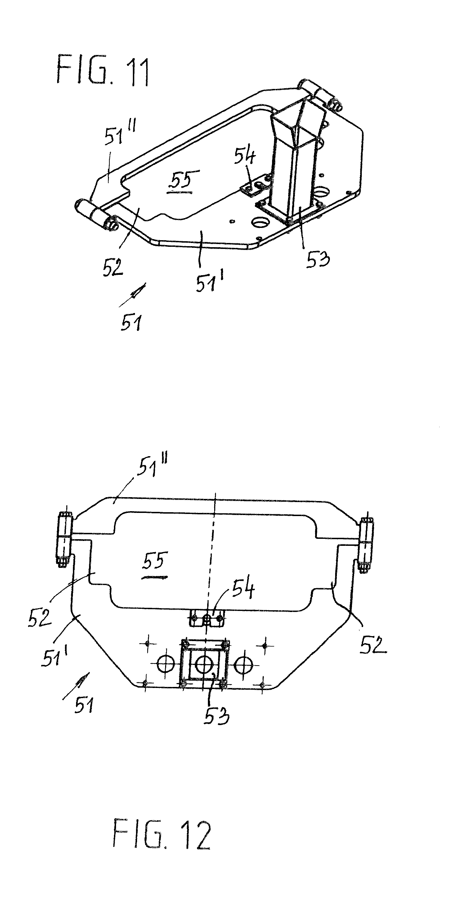

In den Fig. 11 und 12 ist der Führungsteil 51 und in Fig. 13 die Gewindespindel 50 genauer dargestellt.

Der Führungsteil 51 besteht aus zwei miteinander verschraubten Teilen 51' und 51", welche Ausnehmungen 52 bilden, welche in den Holmen 31 und 32 geführt sind.

Am Teil 51' ist eine Aufnahme 53 für das untere Ende des Trägers 37 angeordnet. Ferner befindet sich am Teil 51' ein Lager 54 für das untere Ende der Gewindespindel 50.

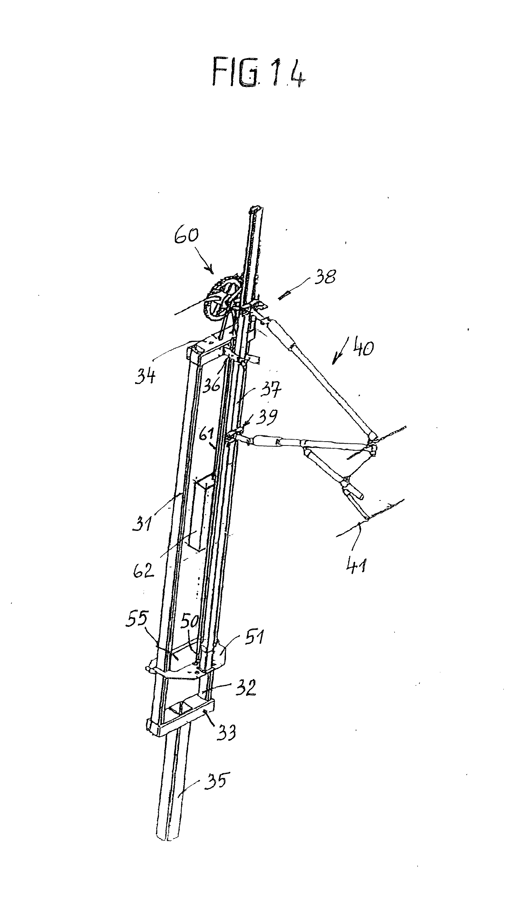

Die mittlere Öffnung 55 nimmt bei Fahrleitungsmasten mit einem Radspannwerk (Fig. 14) das Gewicht 62 auf.

Die Gewindespindel 50 (Fig. 13) besitzt einen mit einem Gewinde versehenen Teil 60, einen glatten Teil 61, eine Schraube 62, die im Lager 54 des Führungsteiles 51 drehbar gelagert ist. Auf der Schraube 62 befindet sich eine Kontermutter 63.

Wird die Gewindespindel 50 verdreht, entweder per Hand durch Angriff am Teil 61 oder mittels eines Schlüssels an der Schraube 62, schraubt sie sich in die Mutter 48 der oberen Führung 36 ein oder aus, und damit wird der Träger 37 lotrecht bewegt.

Beim Ausführungsbeispiel nach Fig. 14 ist auf dem Verbindungsstück 34 die Rolle 60 eines Radspannwerkes angeordnet, an dessen Seil 61 das Gewicht 62 hängt.

Im Rahmen der Erfindung sind zahlreiche Abänderungen möglich. So müsste der Mast nicht als Federpaar ausgebildet sein. Auch die Führungen für den Träger und die Lagerungen für die Gewindespindel könnten konstruktiv anders als dargestellt ausgeführt sein.

## Patentansprüche

1. Fahrleitungsmast für Oberleitungsanlagen elektrischer Schienenfahrzeuge, **dadurch gekennzeichnet, dass** am Mast (1, 1', 1", 31, 32) Führungen (6, 36) für einen den Mast (1, 1', 1", 31, 32) nach oben verlängernden Träger (7, 37) angeordnet sind, der einen die Oberleitung (14) haltenden Ausleger (13, 40) trägt, wobei der Träger (7, 37) in den Führungen (6, 36) verschiebbar ist.

2. Fahrleitungsmast nach Anspruch 1, **dadurch gekennzeichnet, dass** eine auf den Träger (7) wirkende Stellschraube (8) und an einer Führung (6) eine Fixierschraube (10) angeordnet ist.

3. Fahrleitungsmast nach Anspruch 2, **dadurch gekennzeichnet, dass** der Träger (7) als T-Stahlträger oder Doppel T-Stahlträger, vorzugsweise Breitflanschträger ausgebildet ist, der eine Ausklinkung (17) aufweist, mittels der er in eine Führung (6) einsetzbar ist.

4. Fahrleitungsmast nach einem der Ansprüche 1 bis 3, **dadurch gekennzeichnet, dass** der Mast als Federpaar mit zwei im Bereich ihrer Enden miteinander verbundenen Formrohren (1, 1', 1", 31, 32) ausgebildet ist.

5. Fahrleitungsmast nach Anspruch 4, **dadurch gekennzeichnet, dass** eines (1) der beiden Formrohre (1', 1") gegenüber der Verbindung (19) der Formrohre (1', 1") nach oben verlängert ist und an der Verlängerung die Rolle (15) eines Radspannwerkes befestigt ist.

6. Fahrleitungsmast nach Anspruch 5, **dadurch gekennzeichnet, dass** das Gewicht (16') des Radspannwerkes zwischen den beiden Formrohren (1', 1") geführt ist.

7. Fahrleitungsmast nach Anspruch 1, **dadurch gekennzeichnet, dass** eine Gewindespindel (50) in eine im oberen Bereich des Mastes (31, 32) angeordnete Mutter (48) einschraubbar und in einem den Träger (37) in einer Führung haltenden unteren Führungsteil (51) drehbar gelagert ist.

8. Fahrleitungsmast nach Anspruch 7, **dadurch gekennzeichnet, dass** eine obere Führung (36) zwei sich maulförmig nach außen öffnende Führungsteile (42, 43) aufweist, die mit beim Einschieben des Trägers (37) federnd zurückweichenden Sperrfedern (46) versehen sind, wobei zwischen den Führungsteilen (42, 43) die Mutter (48) für die Gewindespindel (50) angeordnet ist.

9. Fahrleitungsmast nach den Ansprüchen 4 und 8, **dadurch gekennzeichnet, dass** die beiden Formrohre (31, 32) als Führung für den unteren Führungsteil (51) ausgebildet sind.

10. Fahrleitungsmast nach Anspruch 9, **dadurch gekennzeichnet, dass** der untere Führungsteil (51) eine mittlere Öffnung (55) besitzt, in der das Gewicht (42) des Radspannwerkes bewegbar ist.
